(19) Europäisches Patentamt
European Patent Office
Office européen des brevets

(11) EP 2 694 580 B1

(12) # EUROPÄISCHE PATENTSCHRIFT

(45) Veröffentlichungstag und Bekanntmachung des Hinweises auf die Patenterteilung:
**10.07.2019 Patentblatt 2019/28**

(21) Anmeldenummer: **12711881.8**

(22) Anmeldetag: **02.04.2012**

(51) Int Cl.:
***C09J 101/02*** (2006.01) ***C09J 103/02*** (2006.01)
***C09J 105/00*** (2006.01) ***C09J 105/04*** (2006.01)
***C09J 105/06*** (2006.01) ***C09J 105/08*** (2006.01)
***C09J 133/00*** (2006.01) ***C09J 143/04*** (2006.01)
***D06N 5/00*** (2006.01) ***C08L 1/02*** (2006.01)
***C08L 5/04*** (2006.01) ***C08L 5/06*** (2006.01)
***C08L 5/08*** (2006.01) ***C08L 33/00*** (2006.01)
***C08L 3/02*** (2006.01) ***C08L 5/00*** (2006.01)

(86) Internationale Anmeldenummer:
**PCT/EP2012/055919**

(87) Internationale Veröffentlichungsnummer:
**WO 2012/136605 (11.10.2012 Gazette 2012/41)**

(54) **WÄSSRIGE BINDEMITTEL FÜR KÖRNIGE UND/ODER FASERFÖRMIGE SUBSTRATE**
AQUEOUS BINDER FOR GRANULAR AND/OR FIBROUS SUBSTRATES
LIANTS AQUEUX POUR DES SUBSTRATS GRANULAIRES ET/OU FIBREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2011 EP 11161026**

(43) Veröffentlichungstag der Anmeldung:
**12.02.2014 Patentblatt 2014/07**

(73) Patentinhaber: **BASF SE**
**67056 Ludwigshafen am Rhein (DE)**

(72) Erfinder:
- **KRÜGER, Christian**
  **67346 Speyer (DE)**
- **SCHÜTZE, Ulrich**
  **67550 Worms (DE)**
- **LABISCH, Oliver**
  **68199 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 0 536 588** **EP-A1- 0 575 625**
**WO-A1-2008/150647**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 694 580 B1

## Beschreibung

Gegenstand der vorliegenden Erfindung ist eine wässrige Bindemittelzusammensetzung, enthaltend als wesentliche Bindemittelkomponenten

a) wenigstens ein Polymerisat P, aufgebaut aus

| | |
|---|---|
| ≥ 3,0 und ≤ 8,5 Gew.-% | Acrylsäure, Methacrylsäure, Itaconsäure, Acrylamid, Methacrylamid, N-Methylolacrylamid und/oder N-Methylolmethacrylamid (Monomere A) |
| ≥ 10 und ≤ 20 Gew.-% | Acrylnitril und/oder Methacrylnitril (Monomere B) |
| ≥ 0 und ≤ 1,5 Gew.-% | 1,4-Butylenglykoldiacrylat, Allylmethacrylat und/oder Divinylbenzol (Monomere C) |
| ≥ 30 und ≤ 60 Gew.-% | 2-Ethylhexylacrylat, n-Butylacrylat, 1,4-Butadien und/oder Ethylacrylat (Monomere E), und |
| ≥ 25 und ≤ 57 Gew.-% | Methylmethacrylat, Styrol und/oder tert.-Butylmethacrylat (Monomere F) |

in einpolymerisierter Form, wobei sich die Mengen der Monomeren A bis F auf 100 Gew.-% aufsummieren, und

b) wenigstens eine Saccharidverbindung S, wobei deren Menge so bemessen ist, dass sie ≥ 10 und ≤ 400 Gew.-Teile pro 100 Gew.-Teilen Polymerisat P beträgt, und

wobei die Gesamtmenge an zusätzlichen formaldehydhaltigen Bindemittelkomponenten ≤ 50 Gew.-Teile pro 100 Gew.-Teilen der Summe der Gesamtmengen an Polymerisat P und Saccharidverbindung S beträgt.

Ferner betrifft die vorliegende Erfindung die Verwendung der vorgenannten wässrigen Bindemittelzusammensetzung als Bindemittel für körnige und/oder faserförmige Substrate, Verfahren zur Herstellung von Formkörpern unter Verwendung der wässrigen Bindemittelzusammensetzung sowie die so hergestellten Formkörper, insbesondere gebundene Faservliese, welche ihrerseits zur Herstellung bitumierter Dachbahnen eingesetzt werden.

Bei polysaccharidhaltigen wässrigen Bindemittelzusammensetzungen ist von folgendem Stand der Technik auszugehen.

In der EP-A 649 870 werden Gemische aus Polycarbonsäuren und Saccharidverbindungen im Gewichtsverhältnis von 95:5 bis 20:80 zur Herstellung von Polymerfilmen mit Gassperrwirkung offenbart.

Die EP-A 911 361 offenbart wässrige Bindemittelsysteme für körnige und/oder faserförmige Substrate, welche ein Polycarboxypolymer mit einem gewichtsmittleren Molekulargewicht von wenigstens 1000 g/mol und ein Polysaccharid mit einem gewichtsmittleren Molekulargewicht von wenigstens 10000 g/mol, enthalten, wobei deren Mengen so bemessen sind, dass das Äquivalenzverhältnis von Carboxylgruppen zu Hydroxylgruppen 3:1 bis 1:20 beträgt.

Desweiteren offenbart die EP-A 1 578 879 wässrige Bindemittelzusammensetzungen zum Beschichten von Glasfasern, umfassend ein Polycarboxypolymer, ein Polyalkohol mit wenigstens zwei Hydroxygruppen sowie ein sogenanntes wasserlösliches Streckungsmittel, wobei als wasserlösliches Streckungsmittel insbesondere Polysaccharide mit einem mittleren Molekulargewicht kleiner 10000 g/mol vorgeschlagen werden.

In der EP-A 575 625 wird ein spezifisches zweistufiges Verfahren zur Herstellung von Butadien-Copolymerisaten offenbart, welches sich im Wesentlichen dadurch auszeichnet, dass ein cyclisches Alken mitverwendet wird und dass in der ersten Stufe ein butadienhaltiges Monomerengemisch und in der zweiten Stufe ein Monomerengemisch ohne Butadien eingesetzt wird bzw. ein Teil des Radikalkettenreglers erst nach Dosierung der Monomeren zugegeben wird. Die so hergestellten wässrigen Polymerdispersionen sollen sich für eine Vielzahl von Anwendungen, wie beispielsweise Klebstoffe, Tiefdruckpapiere sowie Bindemittel für Papierbeschichtung, Teppichrückenbeschichtungen oder Mineralfasern eignen.

Die EP-A 536 588 offenbart Formkörper, zu deren Herstellung wässrige Polymerisatdispersionen eingesetzt werden, wobei die entsprechende Polymerisationsreaktion in Anwesenheit von Saccharidverbindungen erfolgt. Nitrilgruppenhaltige Monomere zur Herstellung der Dispersionspolymerisate sind ganz allgemein unter einer Vielzahl anderer Monomerer erwähnt.

Die WO 2008/150647 offenbart wässrige Bindemittelsysteme zur Herstellung von Fasermatten, umfassend ein Harnstoff/Formaldehyd-Harz und eine wässrige Copolymerisatdispersion, deren Copolymerisat im Wesentlichen aufgebaut ist aus Styrol, Alkylacrylaten bzw. -methacrylaten, Acrylnitril und ein gegebenenfalls substituiertes Acrylamid. Optional kann die wässrige Copolymerisatdispersion noch Stärke enthalten.

Auch die US-A 2009/170978 offenbart wässrige Bindemittelsysteme für Faservliese, umfassend eine wässrige Copolymerisatdispersion, deren Copolymerisat zwischen 5 und 40 Gew.-% wenigstens eines carbonsäuregruppenhaltigen Monomeren in einpolymerisierter Form enthält und eine natürlichen Bindemittelkomponente, ausgewählt aus der Gruppe umfassend Polysaccharide, Pflanzenproteine, Lignine und/oder Ligninsulfonate.

Nachteilig an den Bindemittelsystemen des Standes der Technik ist, dass sie bei der Herstellung von Formkörpern aus körnigen und/oder faserförmigen Substraten, insbesondere im Hinblick auf deren mechanischen Eigenschaften nicht immer voll zu befriedigen vermögen. Aufgabe der vorliegenden Erfindung war es daher, wässrige Bindemittelzusammensetzungen zur Verfügung zu stellen, durch welche die Nachteile der wässrigen Bindemittelzusammensetzungen des Standes der Technik überwunden und durch welche Formkörper mit verbesserter Querreißkraft bei Raumtemperatur und/oder verbesserte Wärmestandfestigkeit bei erhöhter Temperatur zugänglich gemacht werden können.

Die Aufgabe wurde durch die eingangs genannte wässrige Bindemittelzusammensetzung gelöst.

Ein wesentlicher Bestandteil der wässrigen Bindemittelzusammensetzung ist ein Polymeriat P, welches in einpolymerisierter Form aufgebaut ist aus

| | |
|---|---|
| ≥ 3,0 und ≤ 8,5 Gew.-% | Acrylsäure, Methacrylsäure, Itaconsäure, Acrylamid, Methacrylamid, N-Methylolacrylamid und/oder N-Methylolmethacrylamid (Monomere A) |
| ≥ 10 und ≤ 20 Gew.-% | Acrylnitril und/oder Methacrylnitril (Monomere B) |
| ≥ 0 und ≤ 1,5 Gew.-% | 1,4-Butylenglykoldiacrylat, Allylmethacrylat und/oder Divinylbenzol (Monomere C) |
| ≥ 30 und ≤ 60 Gew.-% | 2-Ethylhexylacrylat, n-Butylacrylat, 1,4-Butadien und/oder Ethylacrylat (Monomere E), und |
| ≥ 25 und ≤ 57 Gew.-% | Methylmethacrylat, Styrol und/oder tert.-Butylmethacrylat (Monomere F) |

Die Herstellung der Polymerisate P ist dem Fachmann prinzipiell geläufig und erfolgt beispielsweise durch radikalische Polymerisation der Monomere A bis F nach der Methode der Substanz-, Emulsions-, Lösungs-, Fällungs- oder Suspensionspolymerisation, wobei jedoch die radikalisch initiierte wässrige Emulsionspolymerisation insbesondere bevorzugt ist. Erfindungsgemäß vorteilhaft wird das Polymerisat P daher in einem wässrigen Medium dispergiert, d.h. in Form einer wässrigen Polymerisatdispersion eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt. Von dieser allgemeinen Verfahrensweise unterscheidet sich die Herstellung einer wässrigen Dispersion des Polymerisats P lediglich durch den spezifischen Einsatz der vorgenannten Monomeren A bis F. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Erfindungsgemäß werden daher zur Herstellung der wässrigen Bindemittelzusammensetzungen vorteilhaft wässrige Dispersionen eines Polymerisats P eingesetzt, welches aus

| | |
|---|---|
| ≥ 3,0 und ≤ 8,5 Gew.-% | Acrylsäure, Methacrylsäure, Itaconsäure, Acrylamid, Methacrylamid, N-Methylolacrylamid und/oder N-Methylolmethacrylamid |
| ≥ 10 und ≤ 20 Gew.-% | Acrylnitril und/oder Methacrylnitril |
| ≥ 0 und ≤ 1,5 Gew.-% | 1,4-Butylenglykoldiacrylat, Allylmethacrylat und/oder Divinylbenzol |

(fortgesetzt)

| | |
|---|---|
| $\geq$ 30 und $\leq$ 60 Gew.-% | 2-Ethylhexylacrylat, n-Butylacrylat, 1,4-Butadien und/oder Ethylacrylat, und |
| $\geq$ 25 und $\leq$ 57 Gew.-% | Methylmethacrylat, Styrol und/oder tert.-Butylmethacrylat |

in einpolymerisierter Form aufgebaut ist.

Zur Herstellung der erfindungsgemäß eingesetzten Polymerisate P in Form ihrer wässrigen Polymerisatdispersion (wässrige Polymerisat P-Dispersion) kann die Gesamtmenge der Monomeren A bis F (Gesamtmonomerenmenge) im wässrigen Reaktionsmedium vor Initiierung der Polymerisationsreaktion vorgelegt werden. Es ist aber auch möglich, gegebenenfalls lediglich eine Teilmenge der Monomeren A bis F im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Dabei kann die Dosierung der Monomeren A bis F als separate Einzelströme, als inhomogene oder homogene (Teil)gemische oder als Monomerenemulsion erfolgen. Mit Vorteil werden die Monomeren A bis F in Form eines Monomerengemisches, insbesondere in Form einer wässrigen Monomerenemulsion dosiert.

Zur Herstellung der erfindungsgemäß eingesetzten wässrigen Polymerisat-P-Dispersion werden Dispergierhilfsmittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

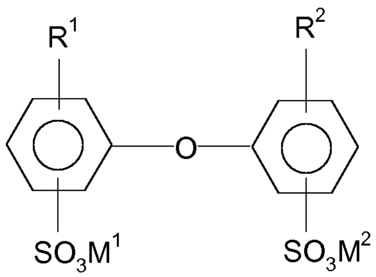

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat. Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,1 und $\leq$ 3 Gew.-%, jeweils bezogen auf die Gesamtmenge der Monomeren A bis F (Gesamtmonomerenmenge), eingesetzt.

Die Gesamtmenge der als Dispergierhilfsmittel zusätzlich oder statt der Emulgatoren eingesetzten Schutzkolloide beträgt oft $\geq$ 0,1 und $\leq$ 40 Gew.-% und häufig $\geq$ 0,2 und $\leq$ 25 Gew.-%, jeweils bezogen die Gesamtmonomerenmenge.

Bevorzugt werden jedoch anionische und/oder nichtionische Emulgatoren und insbesondere bevorzugt anionische Emulgatoren als Dispergierhilfsmittel eingesetzt.

Zur Herstellung der erfindungsgemäß eingesetzten Polymerisat-P-Dispersion kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Zur Herstellung der erfindungsgemäß eingesetzten Polymerisat-P-Dispersion kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 70 bis 100 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis F mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können während der Emulsionspolymerisation optional auch radikalkettenübertragende Verbindungen eingesetzt werden, um das Molekulargewicht der durch die Polymerisation zugänglichen Polymerisate P zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im

Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die während der Emulsionspolymerisation optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis F während der Polymerisation zugeführt werden.

Die erfindungsgemäß eingesetzten Polymerisate P können prinzipiell Glasübergangstemperaturen Tg im Bereich von ≥ -70 und ≤ 150 °C aufweisen. Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Mit Vorteil werden die Monomeren A, B, E und F in Art und Menge so gewählt, dass die lediglich aus ihnen hergestellten Polymerisate eine Glasübergangstemperatur Tg im Bereich von ≥ -10 und ≤ 70 °C und vorteilhaft im Bereich ≥ 5 und ≤ 50 °C und insbesondere vorteilhaft im Bereich ≥ 15 und ≤ 45 °C aufweisen. Unter Glasübergangstemperatur Tg wird im Rahmen dieser Schrift die midpoint temperature nach ASTM D 3418-82 verstanden, ermittelt durch Differentialthermoanalyse (DSC) [vgl. auch Ullmann's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook Ist Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Wesentlich ist, dass die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Gesamtmonomerenmenge, durchgeführt werden kann.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion.

Wird eine Polymersaat verwendet, so wird vorteilhaft eine Fremdpolymersaat eingesetzt. Im Unterschied zu

einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis F zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die durch Emulsionspolymerisation zugänglichen wässrigen Polymerisat P-Dispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel im Bereich ≥ 10 und ≤ 2000 nm, häufig im Bereich ≥ 10 und ≤ 700 nm und oft im Bereich ≥ 50 bis ≤ 400 nm.

Selbstverständlich lassen sich wässrige Polymerisat P-Dispersionen prinzipiell auch in Form sogenannter sekundärer Polymerisatdispersionen herstellen (zur prinzipiellen Herstellung von sekundären Polymerisatdispersionensiehe beispielsweise Eckersley et al., Am. Chem. Soc., Div. Polymer Chemistry, 1977, 38(2), Seiten 630, 631, US-A 3360599, US-A 3238173, US-A 3726824, US-A 3734686 oder US-A 6207756). Die Herstellung der sekundären wässrigen Polymerisat P-Dispersionen erfolgt dabei in der Regel dergestalt, dass die nach der Methode der Substanz- oder Lösungspolymerisation hergestellten Polymerisate P in einem geeigneten organischen Lösemittel aufgelöst und unter Ausbildung von wässrigen Polymeren/Lösemittel-(Mini)emulsionen in ein wässriges Medium dispergiert werden. Anschließende Lösemittelabtrennung liefert die entsprechenden wässrigen Polymerisat P-Dispersionen.

Dementsprechend enthalten die erfindungsgemäßen wässrigen Bindemittelzusammensetzungen wässrige Dispersionen von Polymerisaten P, deren zahlenmittlerer Teilchendurchmesser im Bereich ≥ 10 und ≤ 2000 nm, vorteilhaft im Bereich ≥ 10 und ≤ 700 nm und besonders vorteilhaft im Bereich ≥ 50 bis ≤ 400 nm liegen.

Essentieller Bestandteil der wässrigen Bindemittelzusammensetzung ist neben wenigstens einem Polymerisat P wenigstens eine Saccharidverbindung S.

Im Rahmen dieser Schrift werden unter einer Saccharidverbindung S Monosaccharide, Oligosaccharide, Polysaccharide, Zuckeralkohole sowie Substitutionsprodukte und Derivate der vorgenannten Verbindungen verstanden.

Dabei handelt es sich bei den Monosacchariden um organische Verbindungen der allgemeinen Formel $C_nH_{2n}O_n$, wobei n für eine ganze Zahl 5, 6, 7, 8 oder 9 steht. Diese Monosaccharide werden auch als Pentosen, Hexosen, Heptosen, Octosen oder Nonosen bezeichnet, wobei sich diese Verbindungen in die entsprechenden Aldosen, welche eine Aldehydgruppe, bzw. Ketosen, welche eine Ketogruppe aufweisen, untergliedern lassen. Entsprechend umfassen die Monosaccharide Aldo- oder Ketopentosen, -hexosen, -heptosen, -octosen oder -nonosen. Erfindungsgemäß bevorzugte Monosaccharidverbindungen sind die auch in der Natur vorkommenden Pentosen und Hexosen, wobei Glucose, Mannose, Galactose und/oder Xylose insbesondere bevorzugt sind. Selbstverständlich sind erfindungsgemäß auch alle Stereoisomeren aller vorgenannten Monosaccaride mit umfasst.

Bei den Zuckeralkoholen handelt es sich um die Hydrierungsprodukte der vorgenannten Aldo- oder Ketopentosen, -hexosen, -heptosen, -octosen oder -nonosen, welche die allgemeine Formel $C_nH_{2n+2}O_n$, wobei n für eine ganze Zahl 5, 6, 7, 8 oder 9 steht, aufweisen. Bevorzugte Zuckeralkohole sind Mannit, Lactit, Sorbit und/oder Xylit. Selbstverständlich sollen erfindungsgemäß auch alle Stereoisomeren aller vorgenannten Zuckeralkohole mit umfasst sein.

Bekannt ist, dass die vorgenannten Monosaccharide in Form ihrer Halbacetale bzw. -ketale, gebildet aus einer Hydroxygruppe und der Aldehyd- bzw. Ketogruppe vorliegen, wobei in der Regel ein fünf- oder sechsgliedriger Ring gebildet wird. Reagiert nun eine Hydroxygruppe (aus der Halbacetal- bzw. Halbketalgruppe oder aus der Kohlenstoffgerüstkette) des einen Monosaccaridmoleküls mit der Halbacetal- bzw. Halbketalgruppe eines anderen Monosaccharidmoleküls unter Wasserabspaltung und Ausbildung einer Acetal- bzw. Ketalgruppe (eine solche Bindung wird auch glykosidische Verbindung genannt) so werden Disaccharide (mit der allgemeinen Summenformel $C_nH_{2n-2}O_{n-1}$) erhalten. Desweiteren kann ein solches Disaccharid mit einem weiteren Monosaccharid unter Wasserabspaltung zu einem Trisaccharid reagieren. Durch weitere Umsetzungen mit Monosacchariden werden Tetrasaccharide, Pentasaccharide, Hexasaccharide, Heptasaccharide, Octasaccharide, Nonasaccharide oder Decasaccharide erhalten. Verbindungen, welche aus wenigstens zwei aber maximal zehn Monosaccharidstruktureinheiten über glykosidische Verbindungen aufgebaut sind, werden als Oligosaccharide bezeichnet. Bevorzugte Oligosaccharide sind die Disaccharide, worunter die Lactose, Maltose und/oder Saccharose besonders bevorzugt sind. Selbstverständlich sollen erfindungsgemäß auch alle Stereoisomeren aller vorgenannten Oligosaccharide mit umfasst sein.

Saccharidverbindungen, welche aus mehr als zehn Monosaccharidstruktureinheiten aufgebaut sind, werden im Rahmen dieser Schrift als Polysaccharidverbindungen bezeichnet. Dabei können die Polysaccharidverbindungen aus den Strukturelementen eines Monosaccharids (sogenannte Homoglycane) oder den Strukturelementen von zwei oder mehreren verschiedenen Monosacchariden (sogenannte Heteroglycane) aufgebaut sein. Erfindungsgemäß bevorzugt werden Homoglycane eingesetzt.

Unter den Homoglycanen sind die Stärken, welche aus $\alpha$-D-Glucoseeinheiten aufgebaut sind, insbesondere bevorzugt. Die Stärken bestehen aus den Polysacchariden Amylose (D-Glucoseeinheiten, welche $\alpha$-1,4-glycosidisch miteinander verbunden sind) und Amylopektin (D-Glucoseeinheiten, welche $\alpha$-1,4- und zusätzlich zu ca. 4 % $\alpha$-1,6-glycosidisch miteinander verbunden sind). Üblicherweise enthält natürlich vorkommende Stärke ca. 20 bis 30 Gew.-% Amylose und ca. 70 bis 80 Gew.-% Amylopektin. Durch Züchtung und variierend nach Pflanzenart kann das Verhältnis zwischen Amylose und Amylopektin aber verändert sein. Als Stärken eignen sich alle nativen Stärken, wie beispielsweise Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken beträgt $\geq$ 90 Gew.-%, oft $\geq$ 95 und $\leq$ 100 Gew.-%.

Selbstverständlich umfasst der Begriff Saccharidverbindung S auch die Substitutionsprodukte und Derivate der vorgenannten Mono-, Oligo- und Polysaccharidverbindungen sowie der Zuckeralkohole.

Dabei versteht man unter den Substitutionsprodukten einer Saccharidverbindung S solche, bei denen wenigstens eine Hydroxygruppe der Saccharidverbindung S unter Aufrechterhaltung der Saccharidstruktur funktionalisiert wurde, beispielsweise durch Veresterung, Veretherung, Oxidation etc. Dabei erfolgt die Veresterung beispielsweise durch Umsetzung der Saccharidverbindung S mit anorganischen oder organischen Säuren, deren Anhydriden oder Halogeniden. Von besonderem Interesse sind phosphatierte und acetylierte Saccharidverbindungen. Die Veretherung erfolgt in der Regel durch Umsetzung der Saccharidverbindungen mit organischen Halogenverbindungen, Epoxiden oder Sulfaten in wässriger alkalischer Lösung. Bekannte Ether sind Alkylether, Hydroxyalkylether, Carboxyalkylether und Allylether. Die Oxidation wenigstens einer Hydroxygruppe mittels eines in der organischen Kohlehydratchemie üblichen Oxidationsmittels, wie beispielsweise Salpetersäure, Wasserstoffperoxid, Ammoniumpersulfat, Peroxyessigsäure, Natriumhypochlorit und/oder 2,2,6,6-Tetramethyl-1-piperidinyloxy (TEMPO) entsteht die entsprechende Ketoverbindung (bei Oxidation einer sekundären Hydroxygruppe), bzw. Carboxylverbindung (bei Oxidation einer primären Hydroxygruppe).

Unter Derivaten von Saccharidverbindungen S werden solche Reaktionsprodukte von Oligo- und Polysacchariden verstanden, welche unter Spaltung wenigstens einer Acetal- bzw. Ketalgruppe (wenigstens einer glycosidischen Bindung) und daher unter Abbau der ursprünglichen Saccharidstruktur erhalten werden. Solche Abbaureaktionen sind dem Fachmann geläufig und erfolgen insbesondere dadurch, dass man eine Oligo- oder Polysaccharidverbindung thermischen, enzymatischen, oxidativen und/oder hydrolytischen Bedingungen aussetzt.

Mit Vorteil werden als Saccharidverbindung S Stärke, Cellulose, Guaran, Xanthan, Alginat, Pectin, Chitosan, Gummi Arabicum, Carrageen, Agar und/oder Gellan sowie Substitutionsprodukte oder Derivate hiervon eingesetzt.

Insbesondere bevorzugt sind jedoch Stärken und/oder Stärkederivate bzw. deren Substitutionsprodukte, wie vorteilhaft Maltodextrin und/oder Glucosesirup.

Eine in der betrieblichen Praxis sehr geläufige Größe zur Charakterisierung des Abbaugrades von Stärken ist der DE-Wert. Dabei steht DE für Dextrose Equivalent und bezeichnet den prozentualen Anteil reduzierender Zucker an der Trockensubstanz. Der DE-Wert entspricht daher der Menge an Glucose (= Dextrose) in Gramm, die je 100 g Trockensubstanz das gleiche Reduktionsvermögen hätte. Der DE-Wert ist ein Maß dafür, wie weit der Polymerabbau erfolgt ist. Daher erhalten Stärken mit niedrigem DE-Wert einen hohen Anteil an Polysacchariden und einen niedrigen Gehalt an niedermolekularen Mono- und Oligosacchariden, während Stärken mit hohem DE-Wert hauptsächlich aus niedermolekularen Mono- oder Disacchariden bestehen. Die im Rahmen der vorliegenden Erfindung bevorzugte Maltodextrine weisen DE-Werte im Bereich von 3 bis 20 und gewichtsmittlere Molekulargewichte von 15000 bis 30000 g/mol auf. Ein im Rahmen der vorliegenden Erfindung ebenfalls bevorzugter Glucosesirup weist DE-Werte von 20 bis 30 und gewichtsmittlere Molekulargewichte im Bereich von 3000 bis 9000 g/mol auf. Herstellungsbedingt fallen diese Produkte in Form wässriger Lösungen an und werden daher in der Regel auch als solche in den Handel gebracht. Geeignete Lösungen von Maltodextrinen weisen Feststoffgehalte von 50 bis 70 Gew.-%, geeignete Lösungen von Glucosesirup Feststoffgehalte von 70 bis 95 Gew.-% auf. Insbesondere Maltodextrine sind jedoch auch in sprühgetrockneter Form als Pulver erhältlich. Erfindungsgemäß bevorzugt sind auch, modifizierte abgebaute Stärken, welche DE-Werte von 1 bis 3 und gewichtsmittlere Molekulargewichte Mw von 100000 bis 1000000 g/mol aufweisen und üblicherweise als Feststoff erhältlich sind.

Die Saccharidverbindung S weist in der Regel ein gewichtsmittleres Molekulargewicht im Bereich ≥ 1000 und ≤ 5000000 g/mol, bevorzugt im Bereich ≥ 10000 und ≤ 3000000 g/mol und insbesondere bevorzugt im Bereich ≥ 50000 und ≤ 1000000 g/mol auf. Dabei erfolgt die Bestimmung des gewichtsmittleren Molekulargewichts mittels der dem Fachmann geläufigen Gelpermeationschromatographie mit definierten Standards.

Bevorzugt ist, wenn die erfindungsgemäß verwendete Saccharidverbindung S eine Löslichkeit von ≥ 10 g, vorteilhaft ≥ 50 g und insbesondere vorteilhaft ≥ 100 g pro Liter entionisiertem Wasser bei 20 °C und Atmosphärendruck aufweist. Erfindungsgemäß sind jedoch auch Ausführungsformen mit umfasst, deren Saccharidverbindung S eine Löslichkeit < 10 g pro Liter entionisiertem Wasser bei 20 °C und Atmosphärendruck aufweist. Abhängig von der Menge dieser eingesetzten Saccharidverbindungen S, können diese dann auch in Form ihrer wässrigen Suspension vorliegen. Werden erfindungsgemäß Saccharidverbindungen S in Art und Menge so eingesetzt, dass sie in wässriger Suspension vorliegen, so ist es vorteilhaft, wenn die in wässrigem Medium suspendierten Partikel der Saccharidverbindung S einen mittleren Teilchendurchmesser ≤ 5 μm, bevorzugt ≤ 3 μm und insbesondere bevorzugt ≤ 1 μm aufweisen. Die Bestimmung der mittleren Teilchendurchmesser erfolgt wie bei den wässrigen Polymerisat P-Dispersionen über die Methode der quasielastischen Lichtstreuung (ISO-Norm 13 321).

Erfindungswesentlich ist, dass die Gesamtmenge der Saccharidverbindung S dem wässrigen Polymerisationsmedium vor oder während der Emulsionspolymerisation der Monomeren A bis F oder nach Beendigung der Emulsionspolymerisation der wässrigen Dispersion des Polymerisats P zugegeben werden kann. Selbstverständlich ist es auch möglich, lediglich eine Teilmenge der Saccharidverbindung S dem wässrigen Polymerisationsmedium vor oder während der Emulsionspolymerisation der Monomeren A bis F und die verbleibende Restmenge nach Beendigung der Emulsionspolymerisation der wässrigen Dispersion des Polymerisats P zuzugeben. Wird die eine Teil- oder die Gesamtmenge der Saccharidverbindung S vor oder während der Emulsionspolymerisation der Monomeren A bis F zugegeben, kann diese in der Regel die Funktion des Schutzkolloids übernehmen, wodurch die Menge anderer Schutzkolloide und/oder Emulgatoren reduziert bzw. auf diese gegebenenfalls vollständig verzichtet werden kann.

Erfindungsgemäß beträgt die Menge an Saccharidverbindung S in der Regel ≥ 10 und ≤ 400 Gew.-Teile, vorteilhaft ≥ 25 und ≤ 300 Gew.-Teile und insbesondere vorteilhaft ≥ 40 und ≤ 250 Gew.-Teile an Saccharidverbindung S pro 100 Gew.-Teilen an Polymerisat P.

Wesentlich ist, dass die erfindungsgemäße wässrige Bindemittelzusammensetzung neben dem Polymerisat P und der Saccharidverbindung S zusätzlich noch weitere, dem Fachmann in Art und Menge geläufige Komponenten, wie beispielsweise Verdicker, Pigmentverteiler, Dispergiermittel, Emulgatoren, Puffersubstanzen, Neutralisationsmittel, Biozide, Entschäumer, Polyolverbindungen mit wenigstens 2 Hydroxygruppen und mit einem Molekulargewicht ≤ 200 g/mol, Filmbildehilfsmittel, organische Lösungsmittel, Pigmente oder Füllstoffe etc. enthalten kann.

Vorteilhaft enthält die wässrige Bindemittelzusammensetzung jedoch ≤ 1 Gew.-%, insbesondere vorteilhaft ≤ 0,5 Gew.-% einer Polyolverbindung mit wenigstens 2 Hydroxygruppen und mit einem Molekulargewicht ≤ 200 g/mol, insbesondere ≤ 150 g/mol, wie beispielsweise Ethylenglykol, 1,2-Propandiol, 1,3-Propandiol, 1,2,3-Propantriol, 1,2-Butandiol, 1,4-Butandiol, 1,2,3,4-Butantetrol, Diethanolamin, Triethanolamin etc., bezogen auf die Summe der Gesamtmengen an Polymerisat P und Saccharidverbindung S.

Erfindungswesentlich ist, dass die Gesamtmenge an zusätzlichen formaldehydhaltigen Bindemittelkomponenten in der wässrigen Bindemittelzusammensetzung ≤ 50 Gew.-Teile und vorteilhaft ≤ 10 Gew.-Teile pro 100 Gew.-Teilen der Summe der Gesamtmengen an Polymerisat P und Saccharidverbindung S beträgt. Mit besonderem Vorteil enthält die erfindungsgemäße Bindemittelzusammensetzung keinerlei formaldehydhaltige Bindemittelkomponenten.

Im Rahmen dieser Schrift sollen unter formaldehydhaltigen Bindemittelkomponenten solche Bindemittelkomponenten verstanden werden, zu deren Herstellung Formaldehyd eingesetzt wurde. Häufig erfolgt die Herstellung solcher formaldehydhaltigen Bindemittelkomponenten durch Kondensationsreaktion eines Edukts mit Formaldehyd. Problematisch an diesen formaldehydhaltigen Bindemittelkomponenten ist, dass sie noch bis zu 20000 ppm nicht abreagierten Formaldehyd enthalten und darüber hinaus bei der thermischen Behandlung während des Aushärtvorgangs bei einer Temperatur ≤ 250 °C zusätzlich noch gebundenen Formaldehyd freisetzen können. Beispiele für derartige Verbindungen sind die dem Fachmann geläufigen Harnstoff/Formaldehyd-Harze, Melamin/Formaldehyd-Harze, Phenol/Formaldehyd-Harze, Guanamin/Formaldehyd-Harze, Benzoguanamin/Formaldehyd-Harze oder Acetoguanamin/Formaldehyd-Harze.

Die erfindungsgemäße wässrige Bindemittelzusammensetzung eignet sich vorteilhaft zur Verwendung als Bindemittel für körnige und/oder faserförmige Substrate. Mit Vorteil lassen sich die genannten wässrigen Bindemittelzusammensetzungen daher bei der Herstellung von Formkörpern aus körnigen und/oder faserförmigen Substraten verwenden.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel oder Sand sowie andere organische oder anorganische natürliche und/oder synthetische körnige und/oder faserförmige Verbindungen, deren längste Ausdehnung im Falle von

körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte, beispielsweise genadelte oder chemisch vorgebundene Faservliese mit umfassen. Insbesondere vorteilhaft ist die erfindungsgemäße wässrige Bindemittelzusammensetzung als formaldehydfreies Bindemittelsystem für die vorgenannten Fasern und mechanisch verfestigte oder chemisch vorgebundene Faservliese geeignet.

Das Verfahren zur Herstellung eines Formkörpers aus einem körnigen und/oder faserförmigen Substrat und der vorgenannten wässrigen Bindemittelzusammensetzung erfolgt vorteilhaft dergestalt, dass die erfindungsgemäße wässrige Bindemittelzusammensetzung auf ein körniges und/oder faserförmiges Substrat aufgebracht wird (Imprägnierung), gegebenenfalls das mit der wässrigen Bindemittelzusammensetzung behandelte (imprägnierte) körnige und/oder faserförmige Substrat in Form gebracht wird und anschließend das so erhaltene körnige und/oder faserförmige Substrat einem thermischen Behandlungsschritt bei einer Temperatur ≥ 110 °C, vorteilhaft ≥ 130 °C und insbesondere vorteilhaft ≥ 150 °C unterzogen wird, wobei die Bindemittelzusammensetzung verfilmt und aushärtet.

Wesentlich ist, dass die essentiellen Komponenten der wässrigen Bindemittelzusammensetzung, d.h. die wässrige Dispersion des Polymerisats P und die Saccharidverbindung S, insbesondere in Form ihrer Lösung oder Suspension, vorab des Aufbringens auf das körnige und/oder faserförmige Substrat, homogen gemischt werden können. Es ist aber auch möglich, diese beiden Komponenten erst unmittelbar vor dem Aufbringen, beispielsweise mit einer statischen und/oder dynamischen Mischeinrichtung zu mischen. Selbstverständlich ist es auch möglich, zuerst die wässrige Dispersion des Polymerisats P und danach die wässrige Lösung oder Suspension der Saccharidverbindung S auf das körnige und/oder faserförmige Substrat aufzubringen, wobei die Mischung auf dem körnigen und/oder faserförmigen Substrat erfolgt. In analoger Weise kann aber auch zuerst die wässrige Lösung oder Suspension der Saccharidverbindung S und danach die wässrige Dispersion des Polymerisats P auf das körnige und/oder faserförmige Substrat aufgebracht werden. Selbstverständlich sollen auch Mischformen des Aufbringens der beiden essentiellen Komponenten erfindungsgemäß umfasst sein.

Die Imprägnierung des körnigen und/oder faserförmigen Substrats erfolgt in der Regel dergestalt, dass die wässrige Bindemittelmittelzusammensetzung gleichmäßig auf die Oberfläche des faserförmigen und/oder körnigen Substrats aufgebracht wird. Dabei wird die Menge an wässriger Bindemittelzusammensetzung so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Bindemittel (berechnet als Summe der Gesamtmengen von Polymerisat P und Saccharidverbindung S auf Feststoffbasis) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats mit der erfindungsgemäßen wässrigen Bindemittelzusammensetzung.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 100 °C, bevorzugt ≥ 20 °C und ≤ 90 °C und insbesondere bevorzugt ≥ 40 und ≤ 80 °C und die Aushärtungsstufe bei einer Temperatur ≥ 110 °C, bevorzugt ≥ 130 und ≤ 250 °C und insbesondere bevorzugt ≥ 180 °C und ≤ 220 °C erfolgt.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere eine verbesserte Reißkraft in Querrichtung sowie eine verbesserte Wärmestandfestigkeit auf.

Insbesondere vorteilhaft eignet sich die erfindungsgemäße wässrige Bindemittelzusammensetzung daher zur Herstellung von Faservliesen auf Polyester- und/oder Glasfaserbasis, welche sich ihrerseits insbesondere zur Herstellung von bitumierten Dachbahnen eignen.

Dabei ist die Herstellung von bitumierten Dachbahnen dem Fachmann geläufig und erfolgt insbesondere durch Aufbringen von verflüssigtem, gegebenenfalls modifiziertem Bitumen auf eine bzw. beide Seiten eines mit einer erfindungsgemäßen Bindemittelzusammensetzung gebundenen Polyester- und/oder Glasfaservlieses.

Die Erfindung soll anhand nachfolgender nicht einschränkender Beispiele erläutert werden.

Beispiele

A) Herstellung der Polymerisate P in Form ihrer wässrigen Dispersionen

Polymerisatvergleichsdispersion V1

In einem 2 l-Glaskolben, ausgerüstet mit einem Rührer und 4 Dosiereinrichtungen wurden bei 20 bis 25 °C

(Raumtemperatur) und unter Stickstoffatmosphäre 200 g entionisiertes Wasser sowie 7,7 g einer 33 gew.-%igen wässrigen Polystyrolsaatdispersion (mittlerer Teilchendurchmesser 32 nm) vorgelegt und unter Rühren auf 85 °C aufgeheizt. Nach Erreichen dieser Temperatur wurden 13,8 g von Zulauf 2 innerhalb von 5 Minuten zudosiert. Daran anschließend wurden gleichzeitig beginnend Zulauf 1 und die Restmenge von Zulauf 2 über einen Zeitraum von 3 Stunden mit kontinuierlich gleichbleibenden Mengenströmen und unter Rühren und Aufrechterhaltung der vorgenannten Temperatur zudosiert.

Zulauf 1: wässrige Emulsion aus

| | |
|---|---|
| 17,0 g | Methacrylsäure |
| 8,5 g | Allylmethacrylat |
| 331 g | Styrol |
| 417 g | n-Butylacrylat |
| 51,0 g | Acrylnitril |
| 72,9 g | einer 35 gew.-%igen wässrigen Lösung von N-Methylolacrylamid |
| 113 g | einer 15 gew.-%igen wässrigen Lösung von Natriumlaurylsulfat (Disponil® SDS der Firma Cognis GmbH) |
| 355 g | entionisiertes Wasser |

Zulauf 2: wässrige Lösung aus

| | |
|---|---|
| 64,0 g | entionisiertem Wasser |
| 5,0 g | Natriumpersulfat |

Anschließend ließ man das Polymerisationsgemisch noch 2 Stunden bei 85 °C nachpolymerisieren und kühlte es auf Raumtemperatur ab. Durch Zugabe von 25 gew.-%iger Ammoniaklösung wurde ein pH-Wert von 7,3 eingestellt. Die erhaltene wässrige Polymerisatdispersion wies einen Feststoffgehalt von 52,5 Gew.-% bezogen auf das Gesamtgewicht der wässrigen Dispersion auf. Der zahlenmittlere Teilchendurchmesser zu 242 nm bestimmt.

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13321).

Polymerisatvergleichsdispersion V2

Die Herstellung der Polymerisatvergleichsdispersion V2 erfolgte analog zur Herstellung der Polymerisatvergleichsdispersion V1 mit dem Unterschied, dass in Zulauf 1 289 g anstelle von 51,0 g Acrylnitril, 298 g anstelle von 417 g n-Butylacrylat und 212 g anstelle von 331 g Styrol eingesetzt wurden.

Die erhaltene wässrige Polymerisatdispersion wies einen Feststoffgehalt von 52,5 Gew.-% bezogen auf das Gesamtgewicht der wässrigen Dispersion auf. Der zahlenmittlere Teilchendurchmesser zu 235 nm bestimmt.

Polymerisatdispersion K1

Die Herstellung der Polymerisatdispersion K1 erfolgte analog zur Herstellung der Polymerisatvergleichsdispersion V1 mit dem Unterschied, dass in Zulauf 1 85,0 g anstelle von 51,0 g Acrylnitril, 399 g anstelle von 417 g n-Butylacrylat und 315 g anstelle von 331 g Styrol eingesetzt wurden.

Die erhaltene wässrige Polymerisatdispersion wies einen Feststoffgehalt von 53,2 Gew.-% bezogen auf das Gesamtgewicht der wässrigen Dispersion auf. Der zahlenmittlere Teilchendurchmesser zu 233 nm bestimmt.

Polymerisatdispersion K2

Die Herstellung der Polymerisatdispersion K2 erfolgte analog zur Herstellung der Polymerisatvergleichsdispersion V1 mit dem Unterschied, dass in Zulauf 1 136 g anstelle von 51,0 g Acrylnitril, 374 g anstelle von 417 g n-Butylacrylat und 289 g anstelle von 331 g Styrol eingesetzt wurden.

Die erhaltene wässrige Polymerisatdispersion wies einen Feststoffgehalt von 52,9 Gew.-% bezogen auf das Gesamtgewicht der wässrigen Dispersion auf. Der zahlenmittlere Teilchendurchmesser zu 237 nm bestimmt.

Polymerisatvergleichsdispersion V3

Die Herstellung der Polymerisatvergleichsdispersion V3 erfolgte analog zur Herstellung der Polymerisatvergleichsdispersion V1 mit dem Unterschied, dass in Zulauf 1 187 g anstelle von 51,0 g Acrylnitril, 348 g anstelle von 417 g n-Butylacrylat und 264 g anstelle von 331 g Styrol eingesetzt wurden.
Die erhaltene wässrige Polymerisatdispersion wies einen Feststoffgehalt von 52,7 Gew.-% bezogen auf das Gesamtgewicht der wässrigen Dispersion auf. Der zahlenmittlere Teilchendurchmesser zu 234 nm bestimmt.

Polymerisatvergleichsdispersion V4

Die Herstellung der Polymerisatvergleichsdispersion V4 erfolgte analog zur Herstellung der Polymerisatvergleichsdispersion V1 mit dem Unterschied, dass in Zulauf 1 238 g anstelle von 51,0 g Acrylnitril, 323 g anstelle von 417 g n-Butylacrylat und 238 g anstelle von 331 g Styrol eingesetzt wurden.
Die erhaltene wässrige Polymerisatdispersion wies einen Feststoffgehalt von 52,9 Gew.-% bezogen auf das Gesamtgewicht der wässrigen Dispersion auf. Der zahlenmittlere Teilchendurchmesser zu 240 nm bestimmt.

B) Anwendungstechnische Untersuchungen

Herstellung der Imprägnierflotten

Zur Herstellung der Imprägnierflotten wurde die hydroxypropylierte Kartoffelstärke Emsol® K55 der Firma Emsland Stärke GmbH in Form einer 20 gew.-%igen wässrigen Lösung eingesetzt.
Die Herstellung der Imprägnierflotten erfolgte dergestalt, dass die wässrigen Polymerisatdispersionen K1 und K2 sowie die Polymerisatvergleichsdispersionen V1 bis V4 mit der wässrigen Lösung der hydroxylierten Kartoffelstärke Emsol® K55 derart homogen abgemischt wurden, dass das Gewichtsverhältnis der jeweiligen Feststoffanteile der wässrigen Polymerisatdispersionen zur hydroxylierten Kartoffelstärke 7:3 (entsprechend 42,9 Gew.-Teile Stärke pro 100 Gew.-Teilen Feststoff der wässrigen Polymerisatdispersionen) betrug. Anschließend wurden die erhaltenen homogenen Polymerisat/Stärke-Mischungen durch Verdünnen mit entionisiertem Wasser auf einen Feststoffgehalt von 15 Gew.-% eingestellt. Die entsprechend erhaltenen wässrigen Dispersionen werden als Imprägnierflotten FK1 und FK2 sowie FV1 bis FV4 bezeichnet.

Herstellung der gebundenen Faservliese

Zur Herstellung der gebundenen Faservliese wurde als Rohvlies ein genadeltes Polyethylenterephthalat-Spinnvlies (40 cm Länge, 37 cm Breite) mit einer Dichte von 125 g/m$^2$ der Fa. Freudenberg-Politex verwendet.
Zur Herstellung der bebundenen Faservliese wurde das Rohvlies in Längsrichtung in einer Imprägnieranlage HVF mit Foulard der Firma Mathis (Gummiwalze Shore A = 85° / Stahlwalze) mit der jeweiligen Imprägnierflotten FK1 und FK2 sowie FV1 bis FV4 getränkt. Dabei wurde jeweils der Nasseintrag auf 162,5 g Imprägnierflotte (entsprechend einem Feststoffanteil von 24,4 g) eingestellt. Daran anschließend wurden die erhaltenen imprägnierten Faservliese in einem Labortrockner LTV mit Nadelrahmen der Fa. Mathis (im Umluftbetrieb) getrocknet und gehärtet. Hierzu wurden die jeweiligen imprägnierten Faservliese auf einen aufgeklappten Nadelrahmen aufgelegt, durch Zuklappen fixiert und anschließend für 3 Minuten bei 200 °C getrocknet und ausgehärtet. Die dabei erhaltenen gebundenen Faservliese werden in Abhängigkeit der verwendeten Imprägnierflotten als Faservliese FK1 und FK2 sowie FV1 bis FV4 bezeichnet.

Bestimmung der Reißkraft in Querrichtung

Die Bestimmung der Reißkraft in Querrichtung der Faservliese FK1 und FK2 sowie FV1 bis FV4 bei Raumtemperatur erfolgte nach DIN 52123 mit Hilfe einer Reißmaschine der Fa. Frank (Modell 71565). Es wurden jeweils 5 separate Messungen durchgeführt. Die in Tabelle 1 angegebenen Messergebnisse in N/50 mm stellen die jeweiligen Mittelwerte dieser Messungen dar. Dabei ist die Reißkraft in Querrichtung umso besser zu bewerten, je höher die Messwerte ausfallen.

Bestimmung der Wärmestandfestigkeit

Die Bestimmung der Wärmestandfestigkeit der Faservliese FK1 bis FK4 sowie FV1 und FV2 erfolgte angelehnt

an die DIN 18192 durch Messungen der Dehnung in Längsrichtung sowie der Schrumpfung in Querrichtung bei 200 °C. Hierzu wurden aus den Faservliesen in Längsrichtung 100 x 340 mm-Streifen ausgestanzt. Auf den Faservliesstreifen wurde jeweils ausgehend von den beiden Schmalseiten im Abstand von jeweils 120 mm mittig eine Markierung angebracht, wobei sich eine Messstrecke zwischen den Markierungen von 100 mm ergab. Im Bereich der Mitte dieser Messstrecke wurde die Breite des Faservliesstreifens durch Messung kontrolliert. Daran anschließend wurden die schmalen Enden in Klemmschienen eingespannt. Parallel dazu wurden in einem Trockenschrank das zur Messung erforderliche Stativ sowie ein 8 kg schwere Edelstahlzylinder auf 200 °C aufgeheizt. Zur Prüfung wurden nun die markierten und vermessenen Faservliesstreifen mittels der einen Klemmschiene an das im Trockenschrank befindliche Stativ freihängend angebracht. Daran anschließend wurde der 8 kg schwerer Edelstahlzylinder an die untere Klemmschiene gehängt, die Trockenschranktür geschlossen und das so eingespannte Faservlies für 10 Minuten bei 200 °C im Trockenschrank belassen. Daran anschließend wurde das Laborstativ mitsamt dem belasteten Faservliesstreifen aus dem Trockenschrank genommen und für 5 Minuten bei Raumtemperatur abgekühlt. Danach wurde zuerst der Edelstahlzylinder von der unteren Klemmschiene und dann die obere Klemmschiene vom Stativ abgehängt (Stativ und Edelstahlzylinder wurden zur Temperierung für die nächste Messung wieder in den Trockenschrank gestellt). Nach Entfernen der oberen und unteren Klemmschiene wurde der Faservliesstreifen eben auf den Labortisch gelegt und der jeweilige Abstand zwischen den beiden angebrachten Markierungen (in Längsrichtung) sowie die jeweilige Breite an der schmalsten Stelle (in Querrichtung) der Faservliesstreifen gemessen. Es wurden jeweils Messungen an 5 separaten Messstreifen durchgeführt. Die ebenfalls in Tabelle 1 angegebenen Werte stellen die Mittelwerte dieser Messungen dar. Dabei sind die Ergebnisse umso besser zu bewerten, je kleiner die Dehnung in Längsrichtung und je kleiner die Schrumpfung in Querrichtung ist. Angegeben ist die Änderung in Längs- bzw. Querrichtung in Prozent, bezogen auf die entsprechenden Abstände vor der thermischen Behandlung.

Tabelle 1: Ergebnisse der Querreißkraft bei Raumtemperatur sowie der Wärmestandfestigkeit bei 200 °C

| Faservlies | Querreißkraft bei Raumtemperatur [in N/50 mm | Wärmestandfestigkeit bei 200 °C<br>Dehnung [in %] | Schrumpfung [in %] |
|---|---|---|---|
| FV1 | 288 | 5,2 | -8,0 |
| FK1 | 326 | 4,7 | -5,6 |
| FK2 | 332 | 4,3 | -5,4 |
| FV3 | 329 | 4,5 | -5,7 |
| FV4 | 320 | 4,8 | -6,1 |
| FV2 | 292 | 5,4 | -8,2 |

Aus den Ergebnissen ist klar ersichtlich, dass die mit den erfindungsgemäßen Bindemittelzusammensetzungen hergestellten Faservliese eine verbesserte Querreißkraft bei Raumtemperatur sowie eine verbesserte Wärmestandfestigkeit bei 200 °C aufweisen.

## Patentansprüche

**1.** Wässrige Bindemittelzusammensetzung, enthaltend als wesentliche Bindemittelkomponenten

a) wenigstens ein Polymerisat P, aufgebaut aus

| | |
|---|---|
| ≥ 3,0 und ≤ 8,5 Gew.-% | Acrylsäure, Methacrylsäure, Itaconsäure, Acrylamid, Methacrylamid, N-Methylolacrylamid und/oder N-Methylolmethacrylamid (Monomere A) |
| ≥ 10 und ≤ 20 Gew.-% | Acrylnitril und/oder Methacrylnitril (Monomere B) |
| ≥ 0 und ≤ 1,5 Gew.-% | 1,4-Butylenglykoldiacrylat, Allylmethacrylat und/oder Divinylbenzol (Monomere C) |
| ≥ 30 und ≤ 60 Gew.-% | 2-Ethylhexylacrylat, n-Butylacrylat, 1,4-Butadien und/oder Ethylacrylat (Monomere E), und |
| ≥ 25 und ≤ 57 Gew.-% | Methylmethacrylat, Styrol und/oder tert.-Butylmethacrylat (Monomere F) |

in einpolymerisierter Form, wobei sich die Mengen der Monomeren A bis F auf 100 Gew.-% aufsummieren, und

b) wenigstens eine Saccharidverbindung S, wobei deren Menge so bemessen ist, dass sie ≥ 10 und ≤ 400 Gew.-Teile pro 100 Gew.-Teilen Polymerisat P beträgt, und
wobei die Gesamtmenge an zusätzlichen formaldehydhaltigen Bindemittelkomponenten ≤ 50 Gew.-Teile pro 100 Gew.-Teilen der Summe der Gesamtmengen an Polymerisat P und Saccharidverbindung S beträgt.

**2.** Wässrige Bindemittelzusammensetzung nach Anspruch 1, wobei das Polymerisat P in Form einer wässrigen Polymerisatdispersion eingesetzt wird.

**3.** Wässrige Bindemittelzusammensetzung nach Anspruch 2, wobei die Polymerisatteilchen der wässrigen Polymerisatdispersion einen zahlenmittleren Teilchendurchmesser ≥ 50 und ≤ 400 nm aufweisen, ermittelt nach ISO-Norm 13321.

**4.** Wässrige Bindemittelzusammensetzung nach einem der Ansprüche 1 bis 3, wobei die Art und die Menge der Monomeren A, B, E und F so gewählt werden, dass ein aus ihnen hergestelltes Polymerisat eine Glasübergangstemperatur ≥ 15 und ≤ 45 °C, midpoint temperature nach ASTM D 3418-82, ermittelt durch Differentialthermoanalyse, aufweisen würde.

**5.** Wässrige Bindemittelzusammensetzung nach einem der Ansprüche 1 bis 4, wobei als wenigstens eine Saccharidverbindung S Stärke, Cellulose, Guaran, Xanthan, Alginat, Pectin, Chitosan, Gummi Arabicum und/oder Gellan eingesetzt wird.

**6.** Wässrige Bindemittelzusammensetzung nach einem der Ansprüche 1 bis 5, wobei als Saccharidverbindung S eine Stärke, ein Stärkederivat und/oder deren Substitutionsprodukte eingesetzt wird.

**7.** Wässrige Bindemittelzusammensetzung nach einem der Ansprüche 1 bis 6, wobei die Saccharidverbindung S ein gewichtsmittleres Molekulargewicht ≥ 50000 und ≤ 1000000 g/mol aufweist, ermittelt mittels Gelpermeationschromatographie mit definierten Standards.

**8.** Wässrige Bindemittelzusammensetzung nach einem der Ansprüche 1 bis 7, wobei ≥ 40 und ≤ 250 Gew.-Teile Saccharidverbindung S pro 100 Gew.-Teilen Polymerisat P eingesetzt werden.

**9.** Wässrige Bindemittelzusammensetzung nach einem der Ansprüche 1 bis 8, enthaltend ≤ 10 Gew.-Teile an zusätzlichen formaldehydhaltigen Bindemittelkomponenten pro 100 Gew.-Teilen der Summe der Gesamtmengen an Polymerisat P und Saccharidverbindung S.

**10.** Verwendung einer wässrigen Bindemittelzusammensetzung gemäß einem der Ansprüche 1 bis 9 als Bindemittel für körnige und/oder faserförmige Substrate.

**11.** Verfahren zur Herstellung eines Formkörpers aus körnigen und/oder faserförmigen Substraten, **dadurch gekennzeichnet, dass** eine wässrige Bindemittelzusammensetzung gemäß einem der Ansprüche 1 bis 9 auf das körnige und/oder faserförmige Substrat aufgebracht wird, gegebenenfalls das so behandelte körnige und/oder faserförmige Substrat in Form gebracht wird und anschließend das so erhaltene körnige und/oder faserförmige Substrat einem thermischen Behandlungsschritt bei einer Temperatur ≥ 110 °C unterzogen wird.

**12.** Verfahren zur Herstellung eines Formkörpers gemäß Anspruch 11, **dadurch gekennzeichnet, dass** die Menge an wässriger Bindemittelzusammensetzung so gewählt wird, dass pro 100 g körnigem und/oder faserförmigem Substrat ≥ 1 und ≤ 100 g Bindemittel (entsprechend der Summe der Gesamtmengen an Polymerisat P und Polysaccharidverbindung S) aufgebracht werden.

**13.** Formkörper erhältlich nach einem Verfahren gemäß einem der Ansprüche 11 oder 12.

**14.** Verwendung von Formkörpern gemäß Anspruch 13 zur Herstellung bitumierter Dachbahnen.

## Claims

**1.** An aqueous binder composition comprising, as essential binder components,

a) at least one polymer P constructed from

| | |
|---|---|
| ≥ 3.0 and ≤ 8.5 wt% | of acrylic acid, methacrylic acid, itaconic acid, acrylamide, methacrylamide, N-methylolacrylamide and/or N-methylolmethacrylamide (monomer A) |
| ≥ 10 and ≤ 20 wt% | of acrylonitrile and/or methacrylonitrile (monomer B) |
| ≥ 0 and ≤ 1.5 wt% | of 1,4-butylene glycol diacrylate, allyl methacrylate and/or divinylbenzene (monomer C) |
| ≥ 30 and ≤ 60 wt% | of 2-ethylhexyl acrylate, n-butyl acrylate, 1,4-butadiene and/or ethyl acrylate (monomer E), and |
| ≥ 25 and ≤ 57 wt% | of methyl methacrylate, styrene and/or tert-butyl methacrylate (monomer F). |

in polymerized form, wherein the amounts of monomers A to F sum to 100 wt%, and
b) at least one saccharide compound S, the amount of which is determined such that it is ≥ 10 and ≤ 400 parts by weight per 100 parts by weight of polymer P, and
where the overall amount of additional formaldehyde-containing binder components is < 50 parts by weight per 100 parts by weight of the summed overall amounts of polymer P and saccharide compound S.

**2.** The aqueous binder composition according to claim 1 wherein the polymer P is used in the form of an aqueous polymer dispersion.

**3.** The aqueous binder composition according to claim 2 wherein the polymer particles of the aqueous polymer dispersion have a number average particle diameter ≥ 50 and ≤ 400 nm, determined per ISO 13321.

**4.** The aqueous binder composition according to any one of claims 1 to 3 wherein type and amount of monomers A, B, D, E and F are chosen such that a polymer formed from them would have a glass transition temperature ≥ 15 and ≤ 45°C, midpoint temperature as per ASTM D 3418-82, determined by differential scanning calorimetry.

**5.** The aqueous binder composition according to any one of claims 1 to 4 wherein the at least one saccharide compound S comprises starch, cellulose, guaran, xanthan, alginate, pectin, chitosan, gum arabic and/or gellan.

**6.** The aqueous binder composition according to any one of claims 1 to 5 wherein a starch, a starch derivative and/or substitution products thereof is or are used as saccharide compound S.

**7.** The aqueous binder composition according to any one of claims 1 to 6 wherein the saccharide compound S has a weight average molecular weight ≥ 50 000 and ≤ 1 000 000 g/mol, determined using gel permeation chromatography with defined standards.

**8.** The aqueous binder composition according to any one of claims 1 to 7 wherein ≥ 40 and ≤ 250 parts by weight of saccharide compound S are used per 100 parts by weight of polymer P.

**9.** The aqueous binder composition according to any one of claims 1 to 8 comprising ≤ 10 parts by weight of additional formaldehyde-containing binder components per 100 parts of the summed overall amounts of polymer P and saccharide compound S.

**10.** The use of an aqueous binder composition according to any one of claims 1 to 9 as binder for granular and/or fibrous substrates.

**11.** A process for producing a shaped article from granular and/or fibrous substrates wherein an aqueous binder composition according to any one of claims 1 to 9 is applied to the granular and/or fibrous substrate, the granular and/or fibrous substrate thus treated is optionally shaped and then the granular and/or fibrous substrate thus obtained is subjected to a thermal treatment step at a temperature ≥ 110°C.

**12.** The process for producing a shaped article according to claim 11 wherein the amount of aqueous binder composition is chosen such that ≥ 1 and ≤ 100 g of binder (corresponding to the summed overall amounts of polymer P and

polysaccharide compound S) are applied per 100 g of granular and/or fibrous substrate.

**13.** A shaped article obtainable by a process according to either of claims 11 and 12.

**14.** The use of a shaped article according to claim 13 for producing bituminized roofing membranes.

## Revendications

**1.** Composition aqueuse de liant, contenant comme composants essentiels de liant

a) au moins un polymère P, constitué par

| | |
|---|---|
| ≥ 3,0 et ≤ 8,5% en poids | d'acide acrylique, d'acide méthacrylique, d'acide itaconique, d'acrylamide, de méthacrylamide, de N-méthylolacrylamide et/ou de N-méthylolméthacrylamide (monomères A), |
| ≥ 10 et ≤ 20% en poids | d'acrylonitrile et/ou de méthacrylonitrile (monomères B), |
| ≥ 0 et ≤ 1,5% en poids | de diacrylates de 1,4-butylèneglycol, de méthacrylate d'allyle et/ou de divinylbenzène (monomères C), |
| ≥ 30 et ≤ 60% en poids | d'acrylate de 2-éthylhexyle, d'acrylate de n-butyle, de 1,4-butadiène et/ou d'acrylate d'éthyle (monomères E) et |
| ≥ 25 et ≤ 57% en poids | de méthacrylate de méthyle, de styrène et/ou de méthacrylate de tert-butyle (monomères F) |

sous forme copolymérisée, la somme des quantités des monomères A à F valant 100% en poids, et
b) au moins un composé de type saccharide S, sa quantité étant dimensionnée de manière telle qu'elle représente ≥ 10 et ≤ 400 parties en poids par 100 parties en poids de polymère P, et
la quantité totale de composants de liant supplémentaires, contenant du formaldéhyde, représentant ≤ 50 parties en poids par 100 parties en poids de la somme des quantités totales de polymère P et de composé de type saccharide S.

**2.** Composition aqueuse de liant selon la revendication 1, le polymère P étant utilisé sous forme d'une dispersion aqueuse de polymère.

**3.** Composition aqueuse de liant selon la revendication 2, les particules de polymère de la dispersion aqueuse de polymère présentant un diamètre moyen en nombre de particule ≥ 50 et ≤ 400 nm, déterminé selon la norme ISO 13321.

**4.** Composition aqueuse de liant selon l'une quelconque des revendications 1 à 3, le type et la quantité des monomères A, B, E et F étant choisis de manière telle qu'un polymère préparé à partir de ceux-ci présente une température de transition vitreuse ≥ 15 et ≤ 45°C, "midpoint temperature" selon la norme ASTM D 3418-82, déterminée par thermoanalyse différentielle.

**5.** Composition aqueuse de liant selon l'une quelconque des revendications 1 à 4, l'amidon, la cellulose, le guarane, le xanthane, l'alginate, la pectine, le chitosane, la gomme arabique et/ou le gellane étant utilisé(e)(s) comme au moins un composé de type saccharide S.

**6.** Composition aqueuse de liant selon l'une quelconque des revendications 1 à 5, un amidon, un dérivé d'amidon et/ou leurs produits de substitution étant utilisé (s) comme composé de type saccharide S.

**7.** Composition aqueuse de liant selon l'une quelconque des revendications 1 à 6, le composé de type saccharide S présentant un poids moléculaire moyen en poids ≥ 50.000 et ≤ 100.0000 g/mole, déterminé par chromatographie par perméation de gel à l'aide d'un témoin défini.

**8.** Composition aqueuse de liant selon l'une quelconque des revendications 1 à 7, ≥ 40 et ≤ 250 parties en poids de composé de type saccharide S par 100 parties en poids de polymère P étant utilisées.

**9.** Composition aqueuse de liant selon l'une quelconque des revendications 1 à 8, contenant ≤ 10 parties en poids de composants de liant supplémentaires, contenant du formaldéhyde, par 100 parties en poids de la somme des quantités totales de polymère P et de composé de type saccharide S.

**10.** Utilisation d'une composition aqueuse de liant selon l'une quelconque des revendications 1 à 9 comme liant pour des substrats sous forme de grains et/ou de fibres.

**11.** Procédé pour la fabrication d'un corps façonné à partir de substrats sous forme de grains et/ou de fibres, **caractérisé en ce qu'**une composition aqueuse de liant selon l'une quelconque des revendications 1 à 9 est appliquée sur le substrat sous forme de grains et/ou de fibres, le substrat sous forme de grains et/ou de fibres ainsi traité est le cas échéant façonné et le substrat sous forme de grains et/ou de fibres ainsi obtenu est ensuite soumis à une étape de traitement thermique à une température ≥ 110°C.

**12.** Procédé pour la fabrication d'un corps façonné selon la revendication 11, **caractérisé en ce que** la quantité de composition aqueuse de liant est choisie de manière telle qu'on applique, par 100 g de substrat sous forme de grains et/ou de fibres, ≥ 1 et ≤ 100 g de liant (correspondant à la somme des quantités totales de polymère P et de composé de type saccharide S).

**13.** Corps façonné, pouvant être obtenu selon un procédé selon l'une quelconque des revendications 11 ou 12.

**14.** Utilisation de corps façonnés selon la revendication 13 pour la fabrication de bandes de toit bitumées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 649870 A
- EP 911361 A
- EP 1578879 A
- EP 575625 A
- EP 536588 A
- WO 2008150647 A
- US 2009170978 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- US 2520959 A
- US 3397165 A
- US 3360599 A
- US 3238173 A
- US 3726824 A
- US 3734686 A
- US 6207756 A


### In der Beschreibung aufgeführte Nicht-Patentliteratur


- Encyclopedia of Polymer Science and Engineering. 1987, vol. 8, 659 ff
- **D.C. BLACKLEY.** High Polymer Latices. 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **HOUBEN-WEYL.** Methoden der organischen Chemie. Georg-Thieme-Verlag, 1961, vol. XIV/1, 411-420
- **HOUBEN-WEYL.** Methoden der organischen Chemie. Georg-Thieme-Verlag, 1961, vol. XIV/1, 192-208
- **H. STACHE.** Tensid-Taschenbuch. Carl-Hanser-Verlag, 1981
- McCutcheon’s, Emulsifiers & Detergents. MC Publishing Company, 1989
- **J. BRANDRUP ; E.H. IMMERGUT.** Polymerhandbook. John Wiley & Sons, 1989, 133-141
- **G. KANIG.** *Kolloid-Zeitschrift & Zeitschrift für Polymere,* vol. 190, 1
- Ullmann’s Encyclopedia of Industrial Chemistry. Verlag Chemie, 1992, 169
- *Zosel in Farbe und Lack,* 1976, vol. 82, 125-134
- **T.G. FOX.** *Bull. Am. Phys. Soc.,* 1956, 123
- Ullmann’s Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Ullmann’s Cncyclopedia of Industrial Chemistry. Verlag Chemie, 1992, 169
- Analysis of Polymer Dispersions with an Eight-Cell-AUC-Multiplexer: High Resolution Particle Size Distribution and Density Gradient Techniques. **S.E. HARDING ; W. MÄCHTLE et al.** Analytical Ultracentrifugation in Biochemistry and Polymer Science. Royal Society of Chemistry, 1992, 147-175
- **ECKERSLEY et al.** *Am. Chem. Soc., Div. Polymer Chemistry,* 1977, vol. 38 (2), 630, , 631